# EUROPÄISCHE PATENTSCHRIFT

(11) **EP 1 477 718 B1**
(45) Veröffentlichungstag und Bekanntmachung des Hinweises auf die Patenterteilung: **25.03.2009**
(21) Anmeldenummer: 04010907.6
(22) Anmeldetag: 07.05.2004
(51) Int. Cl.: F16L 21/035, F16L 25/00, F16J 15/10

(54) **Abdichtung an Betonrohren und Schachtbauwerken**
Sealing for concrete pipes and manholes
Joint d'étanchéite pour les tuyaux et les puits en béton

(30) Priorität: 12.05.2003 DE 20307362 U
(43) Veröffentlichungstag der Anmeldung: 17.11.2004
(73) Patentinhaber: PT-POLY-TEC GmbH Vertrieb und Herstellung von Dichtungssystemen, 63150 Heusenstamm (DE)
(72) Erfinder: Preisendörfer, Gerhard, 63150 Heusenstamm (DE)
(74) Vertreter: Blumbach - Zinngrebe

(56) Entgegenhaltungen:
- DE-A1- 2 364 392
- DE-A1- 3 414 180
- DE-A1- 3 522 790
- DE-U1- 8 524 310
- US-A- 4 693 483

## Beschreibung

Die Erfindung bezieht sich auf eine Abdichtung an Betonrohren und Schachtbauwerken, bei denen es zwei ineinander steckbare Formkörper gibt, die bei Betonrohren als Muffe und Spitzende bezeichnet werden.

Derartige Abdichtungen umfassen eine ringförmige Dichtung, die auf einem Dichtungssitz eines ersten Rohrendes aufgenommen wird, welches als Muffe oder Spitzende ausgebildet sein kann. Die ringförmige Dichtung besitzt einen Einführungsabschnitt zur Erleichterung des Zusammenbaus mit einem zweiten Rohrende eines benachbarten Rohres, einen Abdichtabschnitt, um die zusammengebauten Rohrenden abzudichten, und einen hinter dem Abdichtabschnitt befindlichen Abschnitt, der im Raum zwischen der Abdichtzone und dem sogenannten Muffenspiegel liegt und auf dem das Rohrende bei Schrägstellung zur Auflage kommt.

Aus Gründen der Massenproduktion werden Betonrohre relativ rasch aus ihrer Form entmantelt, d.h. man wartet nur die sogenannte Grünstandsfestigkeit ab. Dabei wird in Kauf genommen, dass bei der Entformung die Betonrohre leicht unrund werden können, wodurch wiederum die Gefahr besteht, dass der Spalt zwischen zusammengebauten Betonrohren, in Umfangsrichtung gesehen, unterschiedliche Weite aufweist. Um dies zu überspielen, wird relativ weicher Gummi für die Abdichtung verwendet, der sich auch mit mäßigen Kräften ausreichend stark verformen lässt. Die Verwendung von weichem Gummi bei der Abdichtung an Betonrohren hat aber einen Nachteil beim Zusammenbau der Betonrohre oder Schachtbauwerke. Wenn nämlich die beiden Rohrenden etwas schräg ineinander gesteckt werden, trifft das eine als Frontende bezeichnete Rohrende unsymmetrisch auf die ringförmige Dichtung, und es entsteht die Gefahr, dass der Gummi der Dichtung an der Auftreffstelle von dem rauhen Beton des Rohres mitgezogen wird. Wenn es sich um eine Baustellen-seitig aufgezogene Dichtung handelt, die nicht an ihrem Dichtungssitz verankert ist, wird die Dichtung an dieser Auftreffstelle von ihrem Sitz abheben, und es besteht die Gefahr, dass der abgehobene Teil der Dichtung von dem Rohrende, das in das andere Rohrende hinein bewegt wird, mitgenommen wird, wobei dann Teile der Dichtung abgeschert werden können und in den hinteren Rohrendeausweichabschnitt gelangen. Beim weiteren Zusammenstecken der Rohrenden und Geraderichten der Rohre kann es vorkommen, dass das verschleppte Gummiteil der Dichtung zum Sprengen des als Muffe ausgebildeten Rohrendes führt.

Es gibt auch werkseitig an Betonrohren eingebaute, verankerte Dichtungen. Hierbei ergibt sich ein weiteres Problem, nämlich beim Eingießen des Dichtungsringes in die Wandung des Betonrohrendes. Zum Einbau der Dichtung am Muffenende des Betonrohres dient eine sogenannte Untermuffe, d.h. eine ringschalenförmige Gießform zur Nachformung der Muffe des Betonrohres, wobei die einzugießende Dichtung auf der Untermuffe sitzt, während Beton in die Gesamtform eingefüllt und verdichtet wird. Bei diesen Herstellungsvorgängen besteht die Gefahr der Deformation der Dichtung. Die Dichtung kann durch auftreffende Betonmasse axial gestaucht und damit radial ausgedehnt werden, es kommt auch der umgekehrte Vorgang vor, dass nämlich infolge des schweren, nassen Betons die Dichtung in radialer Richtung zusammengepresst und damit in axialer Richtung des Rohres gestreckt wird. Schließlich ist es auch möglich, dass die Dichtung auf der Untermuffe in axialer Richtung wandert, weil das spezifische Gewicht des nassen Betons sehr viel höher als der des Gummis der Dichtung ist. Weitere Gefahren treten deshalb unvermeidlich auf, weil der nasse Beton durch Rütteln verdichtet werden muss. Gewünscht wird eine gleichmäßige Verdichtung des gesamten Betonrohrkörpers. Dies setzt gleichmäßiges Rütteln entlang der gesamten Herstellungsform für das Betonrohr voraus. Wenn jedoch die Dichtung mit in das Betonrohrende eingegossen werden soll, ist der Eintrag der Rüttelenergie in den zu verdichtenden Beton nicht gleichmäßig: weicher Dichtungsgummi überträgt Schwingungsenergie sehr schlecht, so dass im Bereich der Dichtung die Verdichtung des Betons nicht so gut ist wie in anderen Bereichen. Um dies auszugleichen, wird das Maß des Rüttelns auf die Bedürfnisse in dem Bereich der Dichtung abgestellt, was dazu führt, dass sich in anderen Bereichen sogenannte Schlempe absondert und in der Gießform nach unten fließt, wo sich die Untermuffe mit der darauf sitzenden Dichtung befindet. Die Schlämpe kann in alle möglichen Fugen eindringen und die Teile gegeneinander verschieben und ist deshalb unerwünscht.
Eine Abdichtung mit den Merkmalen des Oberbegriffs des Anspruchs 1 ist aus der DE 85 24310 U1 bekannt. Eine ringförmige Dichtung ist auf das Spitzende eines Betonrohrs bis zum Anschlag an einer Stufe aufgezogen und weist einen weicheren Abschnitt, der den Einführungsabschnitt, den Abdichtabschnitt und einen zylindrischen Distanzabschnitt umfasst, sowie einen härteren Abschnitt auf, der zur Scherlastbegrenzung einen Stütz- oder Distanzkörper bildet und als druckelastischer Gelenkpuffer dient, wenn die Rohre schräg ineinander gesteckt werden. Eine von härterem Material eingefasste Ringzone wird nicht gebildet. Demgemäß wird die zunehmend steilere Federcharakteristik einer Ringzone aus weichem, elastomerem Material nicht erreicht, d. h. die Dichtzone des Standes der Technik entwickelt bei Zusammempressung nicht solche progressive Rückstellkräfte, wie dies eine von härterem Material eingefasste Ringzone vermag.

Bei einer weiteren Dichtung für Betonformteile (DE 34 14 180 A1) ist es bekannt, einen mit einem Druckverteilungsmedium gefüllten, ringförmigen Hohlraum in der Dichtung selbst vorzusehen, um eine gleichmäßige Pressung der Dichtung längs ihres Umfangs zu erzielen. In der Praxis hat sich herausgestellt, dass das Abdichtungsverhalten einer derartigen Dichtung schlecht ist. Die bekannte Dichtung selbst ist nicht aus unterschiedlich harten Materialien aufgebaut, und der ringförmige Hohlraum ist nicht in einer Kammer des Rohrendes untergebracht. Auch kann das Druckverteilungsmittel nicht durch ein Aktivierungsmittel zur Volumenzunahme gebracht werden.

Der Erfindung liegt die Aufgabe zugrunde, eine Abdichtung an Betonrohren und Schachtbauwerken zu schaffen, bei denen die Gefahr des Auftretens der geschilderten Fehler weitgehend reduziert ist.

Die gestellte Aufgabe wird durch die Ausbildung der Dichtung gemäß den Merkmalen des Hauptanspruches gelöst und durch die weiteren Merkmale der Unteransprüche ausgestaltet und weiterentwickelt.

Bei der Erfindung wird wenigstens zweierlei elastomeres Material für die Dichtung verwendet, und zwar das weichere elastomere Material weitgehend nur für den Abdichtabschnitt der ringförmigen Dichtung, während für den Einführungsabschnitt vorzugsweise das härtere elastomere Material verwendet wird und an dem hinter dem Abdichtabschnitt befindlichen Rohrende-Ausweichabschnitt das vergleichsweise härtere elastomere Material eingesetzt wird, so dass der Abdichtabschnitt aus dem weicheren elastomeren Material in einer Art Ringkammer von härterem Material eingefasst wird. Dabei werden auch unerwünschte Deformationen der Dichtung während der Rohrherstellung vermieden.

Durch die Verwendung des relativ härteren elastomeren Materials an der Oberfläche des Einführungsabschnittes wird eine sogenannte Vorzentrierung beim Zusammenbau der Betonrohre erzielt, d. h. die Betonrohre werden beim Zusammenstecken zur Rohrleitungsachse hin ausgerichtet, ohne der Gefahr zu unterliegen, dass Teile des weicheren Elastomermaterials von dem Frontende des einzusteckenden Betonrohres mitgeschleppt und die ringförmige Dichtung dadurch beschädigt wird. Indem das elastomere Material in dem hinter dem Abdichtabschnitt befindlichen Rohrende-Ausweichabschnitt wenigstens teilweise aus dem härteren elastomeren Material besteht, lässt es sich nicht so leicht von dem Sitz am Rohrende abheben, d. h. beim schrägen Ineinanderstecken der Rohrenden kommt es nicht dazu, dass die ringförmige Dichtung im Bereich des Erstauftreffens des Frontendes des Betonrohrs von diesem beim weiteren Eindringen mitgeschleppt wird mit der Folge, dass beim endgültigen Zusammenbau die Muffe gesprengt wird.

Das härtere elastomere Material hat die Eigenschaft, dass die Schwingungsübertragung von der gerüttelten Gießform auf den Beton vergleichsweise besser erfolgt, als wenn die gesamte Dichtung aus weicherem Material bestünde. Man kann Rüttelzeit einsparen und die Gefahr der Bildung von Schlämpe verringern. Deshalb wird so weit wie möglich von dem härteren elastomeren Material in der Dichtung verwendet.

Die Verwendung des relativ härteren elastomeren Materials in dem Rohrende-Ausweichabschnitt dient auch dazu, eine unerwünschte Deformation der Dichtung im Verlauf der Rohrherstellung zu vermeiden. Weicher Gummi, der sich zu Abdichtzwecken gut eignet, deformiert andererseits leicht während des Gießens des Rohres, in welches die Dichtung eingebaut wird. Dies hat unerwünschte Auswirkungen auf die Verteilung der Kompressionskräfte an der Dichtung. Mit der Kombination aus weicherem und härterem elastomerem Material für die Dichtung kann die Verteilung der Kompressionskräfte an der Dichtung bei zusammengesteckten Betonrohren verbessert werden. Dies wird in erster Linie dadurch erzielt, dass die Geometrie der Dichtung beim Zusammenbau der Betonrohre als stabil erachtet werden darf, d. h. dass man weder verdrückte (dickere oder dünnere) Dichtungen noch relativ zur Muffe verschobene Dichtungen antrifft.

Mit der Erfindung gelingt es außerdem, Unrundfehler der hergestellten Betonrohre mit Hilfe der Dichtung etwas auszugleichen. Der Abdichtabschnitt ist in eine Art Ringkammer eingefasst, die von vergleichsweise härterem elastomeren Material gegenüber dem Material des Abdichtabschnittes gebildet wird. Durch Verdrängung des weicheren Materials in Umfangsrichtung der Dichtung verringert sich der Anpressdruck an den Druckspitzen und erhöht sich an den Druckminima, so dass es schließlich zu einer gleichmäßigeren Kompressionsverteilung um den Umfang der Dichtung herum kommt.

In einer Ausgestaltung der Erfindung wird das härtere elastomere Material in der hinter dem Abdichtabschnitt befindlichen Zone, die hier als Rohrende-Ausweichabschnitt bezeichnet wird, mit Hohlräumen versehen, so dass die Gesamtnachgiebigkeit in diesem Abschnitt genügend groß bleibt. Beim Zusammenbau von Rohren ist es mitunter notwendig, mit den zusammenzubauenden Rohren zu manövrieren, wodurch diese geringe Schrägstellungen gegeneinander einnehmen können, ohne dass die Muffen abbrechen dürfen. Deshalb wird für den Ausweichabschnitt eine größere Gesamtnachgiebigkeit im Vergleich zur Abdichtzone verlangt, was hier durch Vorsehen von Hohlräumen erzielt wird.

Zur Erhöhung der Stabilität des Abdichtabschnittes kann in einer Weiterbildung der Erfindung eine Armierung oder Brücke zwischen dem Einführungsabschnitt und dem Rohrende-Ausweichabschnitt oder Auflageabschnitt gebildet werden, wobei als Material der Brücke das härtere elastomere Material, oder auch ein weiteres härteres Material, in Frage kommt.

Zur weiteren Verbesserung der Kompressionsverteilung kann die eingefasste Ringzone außer dem weicheren elastomeren Material auch eine Ringzone mit Gel umfassen, welches vorzugsweise in einen elastischen endlosen Schlauch eingefüllt ist. Es wird ein druckfestes Gel bevorzugt, welches die auftretenden Drücke aushalten kann. Bei dem Gel kann es sich auch um ein Aktivierungsmittel handeln, das zum Quellen gebracht werden kann, d.h. sich bei Aktivierung sogar ausdehnt.

Die Erfindung wird anhand der Zeichnung beschrieben. Dabei zeigt:
- Fig. 1: einen Schnitt durch den Randbereich eines Betonrohres mit Dichtung in einer ersten Grundform,
- Fig. 2: eine erste Abwandlung der Dichtung mit Brücke,
- Fig. 3: eine zweite Abwandlung der Dichtung mit Gelringzone,
- Fig. 4: eine dritte Abwandlung der Dichtung mit Randübergriff,
- Fig. 5: eine vierte Abwandlung der Dichtung mit Armierungen,
- Fig. 6: eine zweite Grundform einer Dichtung,
- Fig. 7: eine erste Variante zur zweiten Grundform der Dichtung mit Brücke,
- Fig. 8: eine zweite Variante der Dichtung mit Brücke,
- Fig. 9: eine dritte Variante der Dichtung mit Gelringzone,
- Fig. 10: eine vierte Variante der Dichtung mit Armierung,
- Fig. 11: eine dritte Grundform der Dichtung und
- Fig. 12: eine Abwandlung mit Brücke.

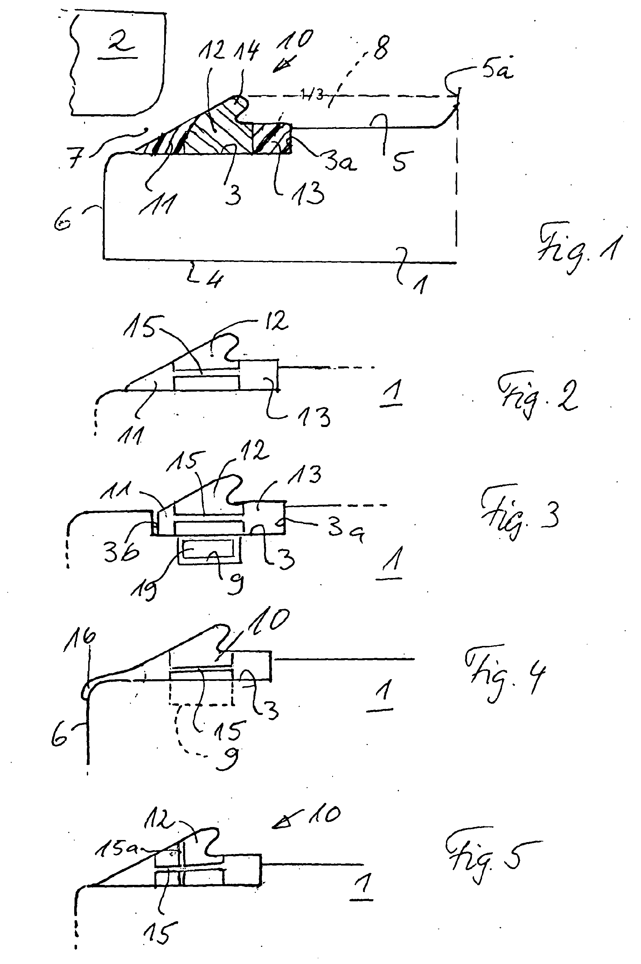

Fig. 1 zeigt eine Schnittdarstellung durch den Rand eines ersten Rohrendes 1, eines zweiten Rohrendes 2 und eine Ringdichtung 10, die auf eine Randaussparung 3 mit Schulter 3a des Rohrendes 1 aufgezogen ist. Das Rohrende weist eine Seite 4 auf, die eine Rohr-Innenseite oder Außenseite ist, je nachdem, ob es sich um ein Spitzende oder eine Muffe handelt, ferner eine Schalungsringseite 5 mit Schulter 5a und eine Stirnseite 6. Die Dichtung 10 enthält einen Einführungsabschnitt 11, einen Abdichtabschnitt 12 und einen Rohrende-Ausweichabschnitt 13. Die Zonen oder Abschnitte 11, 12 und 13 sind ringförmig ausgebildet, deren nicht dargestellte Umlaufkanten im Falle eines als Muffe ausgebildeten Rohrendes 1 in der Zeichnung nach oben und für ein Spitzende nach unten laufen.

Der Abdichtabschnitt 12 weist einen lippenartigen Fortsatz 14 auf, der beim Zusammenbau von zwei Rohrenden 1 und 2 zusammengepresst wird und teilweise auf dem Rohrende-Ausweichabschnitt 13 zur Auflage gelangt. Eine derartige Form der Dichtung wird auch als Presslippendichtung bezeichnet und besitzt einen Manövrierraum 8 zwischen der Lippe 14, der Schalungsring-Rohrwandung 5 und der Schulter 5a. Dieser Manövrierraum 8 wird bei der Herstellung des Rohrendes 1 mit integrierter Dichtung 10 durch einen verlorenen Schalungsring geschaffen und ermöglicht eine leichte Schrägstellung der Rohre 1, 2 gegeneinander. Der Abschnitt 13 kann einen Hohlraum (nicht dargestellt) aufweisen.

Der Einführungsabschnitt 11 und der Ausweichabschnitt 13 sind aus härterem elastomeren Material aufgebaut als das vergleichsweise weichere elastomere Material des Abdichtabschnittes 12. Wenn das erste Rohrende 1 mit einem zweiten Rohrende 2 zusammengesteckt wird, trifft das Frontende des zweiten Rohrendes 2 im allgemeinen auf den Einführungsabschnitt 11, vor allem bei leichter Schrägstellung der Rohre 1, 2, und wird zentriert, ohne dass Teile des weichen Abdichtabschnittes von dem Frontende abgerissen werden. Da der Abschnitt 13 aus härterem Material besteht, werden deshalb Teile des Abdichtabschnitts 12 gewissermaßen in eine Art Ringkammer eingeschlossen, was die Ausdehnung des Materials des Abdichtabschnittes 12 in axialer Richtung des Rohrendes 1 behindert, jedoch das Ausweichen und die Verdrängung in Umfangsrichtung ermöglicht, wenn ausreichend weiches elastomeres Material verwendet wird. Wenn das erste Rohrende 1 und/oder das zweite Rohrende 2 unrund sein sollten, wird deshalb beim Zusammenbau der Spalt 7 zwischen diesen beiden Rohrenden 1 und 2 weitere und engere Bereiche aufweisen und das Material des Abdichtabschnittes in der von festeren Wänden eingefassten Ringzone wird in Umfangsrichtung der Dichtung 10 in die weiteren Spaltbereiche hinein gedrängt und erhöht dort die fehlende Anpressung, während die Anpressung in den engeren Spaltbereichen gegenüber dem Zustand ohne die erfindungsgemäße Maßnahme entlastet wird.

Fig. 2 zeigt eine erste Abwandlung der Dichtung 10, und zwar erstreckt sich eine Brücke 15, die eine Armierung oder Zuganker bildet, zwischen den Abschnitten 11 und 13. Die aus einem Band oder einem Gitter bestehende Brücke 15 kann aus dem gleichen Material wie das der Abschnitte 11 und 13 bestehen, jedoch auch aus einem dritten, noch härteren Material, wobei sogar Metallband mit Verankerungsenden in den Abschnitten 11 und 13 möglich ist. Die Brücke 15 stabilisiert das relativ weiche Material des Abschnitts 12 und verhindert, dass die von den Abschnitten 11 und 13 gebildeten Wände sich voneinander entfernen können, wenn der Abdichtabschnitt 12 beim Zusammenbau der Rohrenden 1 und 2 unter inneren Druck gerät. Somit kann sich dieser innere Druck dahingehend auswirken, dass Teile des Materials des Abdichtabschnittes 12 sich in Umfangsrichtung der Dichtung ausbreiten und evtl. auftretende größere Spaltweiten 7 ausfüllen.

Fig. 3 zeigt eine weitere Variante der Dichtung 10 mit integrierter Brücke 15, bei der die Aussparung 3 zwei Anschlagswände 3a, 3b besitzt, an denen sich die Abschnitte 11 und 13 abstützen können. In dem Rohrende 1 ist ferner noch eine Ringaussparung 9 vorgesehen, in die ein geschlossener ringförmiger Schlauch mit steifem Gel 19 eingelegt ist und an den Abdichtabschnitt 12 angrenzt. Wenn beim Zusammenbau der Rohrenden 1 und 2 dieser Abdichtabschnitt 12 unter inneren Druck gesetzt wird, überträgt sich dieser Druck auch auf das Gel 19, das sich wie eine inkompressible Flüssigkeit verhält.
Für den Fall, dass der Abdichtabschnitt 12 an seinem Umfang ungleichmäßig belastet wird, wirkt sich dies auf die Verteilung des Gels 19 aus, so dass es zu einer gleichmäßigen Anpressung des Abdichtabschnittes 12 längs seines Umfanges kommt. Damit können auch größere Schwankungen in der Weite des Spaltes 7 ausgeglichen werden.

Fig. 4 zeigt eine weitere Variante der Dichtung 10, und zwar weist der Einführungsabschnitt 11 einen Fortsatz 16 auf, der bis zur Anlage auf der Stirnfläche 6 des Rohrendes 1 reicht oder in diese einbezogen ist. Damit wird der Halt der Dichtung 10 in der Aussparung 3 verbessert und das Abstoßen der Kante zwischen den Flächen 3/6 mit Abbrechen von Betonteilen vermieden.

Fig. 5 zeigt eine Ausführungsform der Dichtung 10, bei der die Brücke 15 als starke Armierung des Abdichtabschnittes 12 ausgebildet ist. Die Armierung 15 weist radiale Ringwände 15a auf, welche in Umfangsrichtung der Dichtung 10 laufen und damit die Ausbreitung des Abdichtmaterials in Umfangsrichtung begünstigen, dagegen in axialer Richtung der Rohre behindern. Damit wird der Ausgleich der Anpressung der Dichtung unterstützt, ohne dass Verlust einer gewissen Formstabilität der Dichtung eintritt.

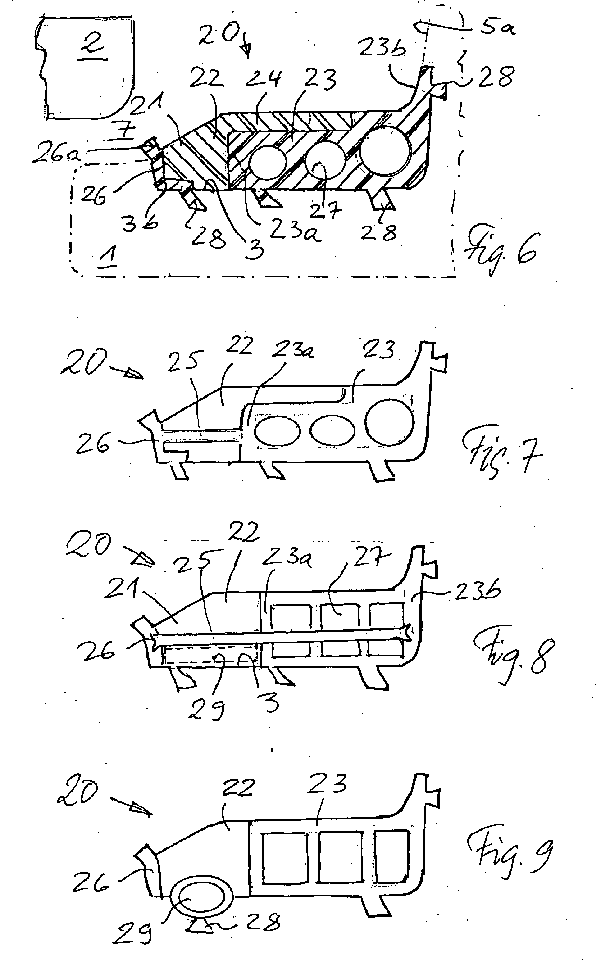

Fig. 6 zeigt eine weitere Grundform einer Dichtung 20, die zum Eingießen bei der Herstellung des Betonrohres gedacht ist, dessen Muffenende 1 angedeutet ist. Die Dichtung 20 weist einen Einführungsabschnitt 21, einen Abdichtabschnitt 22 und einen Rohrende-Ausweichabschnitt 23 auf und ist als Kompressionsdichtung ausgebildet. Der Abdichtabschnitt 22 und Teile des Einführungsabschnittes 21 sind aus vergleichsweise weicherem elastomeren Material aufgebaut, während der Rohrende-Ausweichabschnitt 23 - bis auf einen Oberflächenbereich 24 - und der vorderste Teil des Einführungsabschnitts 21 mit einer Wandzone 26 aus vergleichsweise härterem elastomerem Material bestehen. An dem Muffenspiegel 5a ist ferner ein Anstoßschutz 23b vorgesehen, um das Aufeinandertreffen von Beton (des Rohrendes) auf Beton (des Muffenspiegels) zu vermeiden. Der Rohrende-Ausweichabschnitt 23 verfügt ferner über eine Reihe von Hohlräumen 27, die einerseits zur Materialersparnis und andererseits zur Erteilung größerer radialer Gesamtnachgiebigkeit des Rohrende-Ausweichabschnittes 23 gegenüber dem Abdichtabschnitt 2 dienen. Auf diese Weise können die Rohre 1, 2 um ein gewisses (geringeres) Maß schräg gestellt werden. Die Dichtung 20 verfügt ferner über eine Reihe von Verankerungsfortsätzen 28, die zur besseren Einbindung der Dichtung 20 in dem Rohrende 1 dienen. Die Wandzone 26 kann einen Schlempeabweiser 26a aufweisen. Der Rohrende-Ausweichabschnitt 23 weist eine Wand 23a auf, die benachbart zu dem Abdichtabschnitt 22 ist und zusammen mit der Wandzone 26 die von festeren Wänden eingefasste Ringzone begrenzt, die das vergleichsweise weichere elastomere Material aufnimmt. Es kann besonders weicher Gummi mit einer Shore-Härte bis herab zu 25° verwendet werden, der sehr gut abdichtet, ohne außer Form zu geraten, weil die Dichtungsbereiche 23, 26 mit dem härteren Elastomer für die Formstabilität der Dichtung sorgen. Die Weichzone 24 bildet eine Art Abdichtungslippe, welche die Abdichtungszone verbreitert.

Bei der Herstellung des Rohres 1 wird eine sogenannte Untermuffe verwendet, an der die Dichtung 20 anliegt und die Teil der Gießform des Betonrohres ist. Zur Verdichtung des frisch eingefüllten Betons wird gewöhnlich die Gießform gerüttelt, wobei sich die Vibrationen der Gießform auf die eingefüllte Betonmischung übertragen. Im Bereich der Dichtung 20 wird zwar die Rüttelenergie nicht ganz so gut übertragen wie in sonstigen Bereichen, jedoch sorgt das härtere Elastomermaterial des Abschnittes 23 und der Wand 26 dafür, dass genügend Rüttelenergie auf die Betonmischung übertragen wird. Die Bemessung der Hohlräume 27 ist derart, dass bei den in der Gießform auftretenden Drücken der Abschnitt 23 trotz seiner Hohlräume 27 nicht zusammen gepresst wird. Andererseits sind die Hohlräume 27 genügend groß und zahlreich, dass unter den erheblich höheren Drücken beim Zusammenbau von Rohren der Abschnitt 23 stärker zusammen gepresst werden kann als der Abschnitt 22.

Beim Zusammenbau der beiden Rohrenden 1 und 2 wird der Abdichtabschnitt 22 zusammengepresst und das elastomere Material, welches unter den hier betrachteten Druckverhältnissen nicht komprimierbar ist, versucht diesem Druck auszuweichen, d. h. Teile des Materials werden in druckniedrigere Zonen verdrängt. Wegen der festeren Wände 23a und 26 wird das elastomere Material auch in Umfangsrichtung der Dichtung 20 zu solchen Stellen hin geleitet, an denen die Spaltweite 7 dies zulässt. Mit anderen Worten, der Spalt 7 zwischen den beiden Rohrenden 1 und 2 wird auch an solchen Stellen hinreichend ausgefüllt, an denen sonst zuwenig Abdichtmaterial der Zone 22 vorhanden wäre. Wegen der Hohlräume 27 lässt sich der Abschnitt 23 radial zusammen drücken, d. h. eine Verdrängung des Materials zur Seite in tangentialer Richtung hin wird nicht benötigt, um zu der erforderlichen radialen Reduzierung der Abmessungen dieses Abschnittes im Falle des Manövrierens der Betonrohre 1, 2 zu gelangen. Die Wandstärken zwischen den Hohlräumen 27 sind ausreichend dünn, so dass sich bei diesem Manövrieren kein solcher Druck aufbauen kann, der zum Absprengen der Rohrmuffe führen würde. Im Ergebnis wird somit bei der Erfindung das unterschiedliche Materialverhalten von weicherem Vollmaterial gegenüber härterem, aber mit Hohlräumen versehenem Material ausgenutzt.

Die Wandzone 26 kann auch aus dem relativ weicheren Material bestehen, weil die Anschlagswand 3b die Funktion der Ringzonenwand zum Einschluss des relativ weicheren Materials übernehmen kann.

Fig. 7 zeigt eine Variante der zweiten Grundform der Dichtung 20. Die Begrenzungswände 23a und 26 der Ringzone sind über eine Brücke 25 miteinander verbunden, um die Ausweitung der Weichgummi-Einschlussringzone in Achsrichtung der Rohrenden 1, 2 zu verhindern. Damit wird die Verdrängung des weicheren elastomeren Materials in Umfangsrichtung der Dichtung 20 begünstigt.

Fig. 8 zeigt eine Ausführungsform mit besonders großen Hohlräumen 27 und einer Gitterrost-Brücke 25, die sich zwischen der Wandzone 26 und der Anstoßschutz-Wand 23b des Rohrende-Ausweichabschnittes 23 erstreckt und als Einlageteil ausgebildet ist. Zwischen Brücke 25 und dem Beton des Rohrendes befindet sich ein mit Gel gefüllter Hohlraum 29. Das Gel ist druckfest, kann aber leicht in dem Ringraum zwischen Gitterrost-Brücke 25 und dem Boden der Aussparung 3 verschoben werden. Bei ungleichmäßiger Belastung der Abdichtzone 22 wird Gelmaterial längs des Umfanges der Ringzone 29 verschoben und trägt so zum Ausgleich der Kompression des Abdichtabschnittes 22 bei.

Fig. 9 zeigt eine Ausführungsform, bei der die Gel-Ringzone 29 durch einen endlosen Schlauch mit Gelfüllung gebildet wird, der beim Eingießen der Dichtung 20 mit eingegossen worden ist.

Als Gel kann auch ein Aktivierungsmittel verwendet werden, welches durch zugeführte Energie oder Feuchtigkeitszutritt aktiviert wird und quillt, d.h. sein Volumen zu vergrößern versucht. Dadurch ist es mit der Dichtung 10 oder 20 möglich, zunächst unzureichend abgedichtete Stellen des Spaltes nachzudichten. Es können die bekannten Aktivierungsmethoden angewendet werden, darunter Wärmezufuhr über Mikrowelle, Widerstandsheizung und dergleichen, wenn entsprechende Vorsorge für diese Aktivierungsart getroffen worden ist. Wegen Feuchtigkeitszutritt kann der Schlauch, in welchem sich das Gel-Aktivierungsmittel befindet, perforiert sein, oder bei Widerstandsheizung können Widerstandsdrähte in der Brücke 25 mit einbezogen sein.

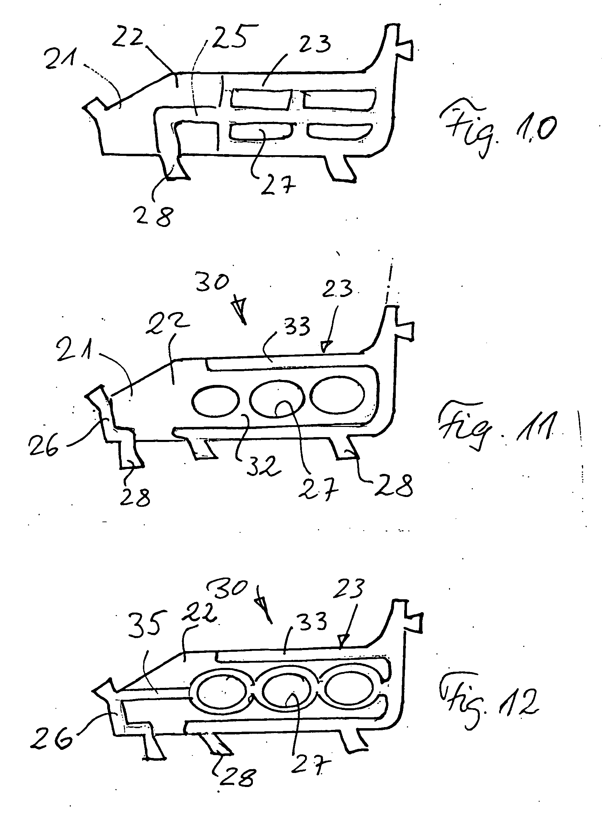

Fig. 10 zeigt eine weitere Variante der zweiten Grundform, bei welcher die Armierung 25 in einem Verankerungsfortsatz 28 ausläuft. Der Einführungsabschnitt 21 und der Abdichtabschnitt 22 bestehen aus dem weicheren elastomeren Material und der Rohrende-Ausweichabschnitt 23 aus dem härteren elastomeren Material, weist jedoch die Hohlräume 27 auf, um zu größerer Gesamtkompressibilität zu führen.

Fig. 11 zeigt eine weitere Grundform 30, bei der der Rohrende-Ausweichabschnitt 23 eine Schale 33 aus dem härteren elastomeren Material und einen Kern 32 aus weicherem elastomerem Material besitzt, das mit den Hohlräumen 27 versehen ist. An der Schale 33 und der Wand 26 befinden sich Verankerungsfortsätze 28. Infolge der Schale 33 wird bei der Herstellung der Betonrohre die Rüttelenergie noch ausreichend gut in den feuchten Beton eingeleitet. Die Ausführungsform der Fig. 11 wird dann angewendet, wenn man Gründe hat, nicht ganz so weiches, elastomeres Material des Abdichtabschnittes 22 zu wählen, wie dies bei der Grundform 20 möglich ist.

Die Ausführungsform der Fig. 12 entspricht weitgehend der Fig. 11, außer dass eine Brücke 35 aus dem härteren Material verwendet wird, in welcher die Hohlräume 27 einbezogen sind.

Als Shore-Härte des weicheren elastomeren Materials kommt ein Bereich zwischen 20 und 25 als untere Grenze und 50 als obere Grenze in Betracht, wobei die zweite Grundform 20 sich insbesondere für die niedrigen Shore-Härten eignet. Das härtere elastomere Material kann eine Shore-Härte zwischen 50 und 70 aufweisen. Zwischen weicherem und härterem elastomerem Material wird immer eine Shore-Härte-Differenz von wenigstens 10 eingehalten.

Der Ausdruck "Rohrende" in den Ansprüchen umfasst jegliche ineinander steckbare Formkörper auch bei Schachtbauwerken, bei denen Spalten zwischen Bauwerkteilen abgedichtet werden müssen.

Als weiches elastomeres Material kommen vor allem Styrol-Butadien-Kautschuk (SBR), Nitrilkautschuk (NBR) und Ethylen-Propylen-Dien-Mischpolymerisat (EPDM) in Betracht. Bei dem härteren Material kann man ein thermoplastisches Elastomer währen, es kommt jedoch auch ein billiger Kunststoff in Betracht, der sogar recycelt sein kann und beispielsweise aus Polyvinylchlorid (PVC) oder Polyethylen (PE, TPE) bestehen kann. Man kann aber auch edlere Materialien einsetzen, z. B. Styrol-Butadien-Kautschuk (hart) oder Ethylen-Propylen-Dien-Mischpolymerisat (hart). In jedem Fall wird man aber die Grundsubstanz oder Elastomerbasis zwischen dem weicheren Material und dem härteren Material unterschiedlich wählen.

Soweit die Abdichtung mit aggressiven Medien in Berührung kommt, wozu auch Wurzelwerk zählt, können chemisch oder biologisch wirksame Additive dem weicheren und/oder dem härteren Material der Dichtung zugesetzt werden, um die Widerstandskraft der Dichtung gegen solche Aggression zu erhöhen.

## Patentansprüche

1. Abdichtung an Betonrohren und Schachtbauwerken, mit folgenden Merkmalen:
ein Dichtungssitz an einem ersten Rohrende (1) zur Aufnahme einer ringförmigen Dichtung (10; 20, 30);
eine ringförmige Dichtung (10; 20, 30), die aus elastomerem Material unterschiedlicher Härte aufgebaut ist und einen Einführungsabschnitt (11; 21), einen Abdichtabschnitt (12; 22) aus einem weicheren elastomeren Material sowie einen hinter dem Abdichtabschnitt befindlichen Rohrende-Ausweichabschnitt (13; 23) aus einem wenigstens bereichsweise härteren elastomeren Material aufweist, wobei der Einführungsabschnitt (11; 21) zur Erleichterung des Zusammenbaus mit einem zweiten Rohrende (2) des benachbarten Rohres ausgebildet ist und der Abdichtabschnitt (12; 22) die zusammengebauten Rohrenden (1, 2) abdichtet;
**dadurch gekennzeichnet,**
**dass** der Dichtungssitz durch eine Aussparung (3) gebildet ist, die eine Schulterausbildung (3a, 3b) zur Abstützung des Einführabschnitts aufweist und/oder der Einführungsabschnitt (11; 21) wenigstens gegenüber dem Abdichtabschnitt (12; 22) bereichsweise härteres elastomeres Material enthält, das sich vollflächig an einer am ersten Rohrende vorgesehenen Aussparung (3) abstützt, so dass der Abdichtabschnitt (12; 22) zwischen Einführungsabschnitt (11; 21) und dem Rohrende-Ausweichabschnitt (13, 23) mit dem härteren, elastomeren Material eine von härterem Material eingefasste Ringzone bildet, aus welcher das weichere elastomere Material der Abdichtzone nicht ausweichen kann.

2. Abdichtung an Betonrohren und Schachtbauwerken nach Anspruch 1,
**dadurch gekennzeichnet, dass** der Abdichtabschnitt (12; 22) eine Armierung enthält oder dass der Einführungsabschnitt (11; 21) und der Rohrende-Ausweichabschnitt (13; 23) aus einem wenigstens bereichsweise härteren elastomeren Material durch eine Brücke (15; 25; 35) aus festerem Material miteinander verbunden sind.

3. Abdichtung nach Anspruch 1 oder 2,
**dadurch gekennzeichnet, dass** das erste Rohrende (1) eine Muffe darstellt und die ringförmige Dichtung (10; 20; 30) mit der Muffe integriert hergestellt worden ist und als Presslippendichtung (10) oder als Kompressionsdichtung (20, 30) ausgebildet ist, wobei der Rohrende-Ausweichabschnitt (13) mit härterem elastomerem Material einen Manörvierraum (8) für das zweite Rohrende (2) freilässt.

4. Abdichtung an Betonrohren und Schachtbauwerken nach Anspruch 3,
**dadurch gekennzeichnet, dass** der Rohrende-Ausweichabschnitt (23) mit Hohlräumen (27) versehen ist, um diesem Abschnitt eine größere radiale Gesamtnachgiebigkeit im Vergleich zu dem Abdichtabschnitt (22) zu erteilen.

5. Abdichtung an Betonrohren und Schachtbauwerken nach einem der Ansprüche 1 bis 4,
**dadurch gekennzeichnet, dass** der Abdichtabschnitt (12, 22) eine Ringkammer (9) mit einem Gel (19; 29) umfasst, das bei radialem Druck auf den Abdichtabschnitt in dessen Umfangsrichtung wandern kann, und dass als Gel (19; 29) ein Aktivierungsmittel benutzt wird, das zur Volumenzunahme gebracht werden kann.

6. Abdichtung an Betonrohren und Schachtbauwerken nach einem der Ansprüche 1 bis 5,
**dadurch gekennzeichnet, dass** das härtere elastomere Material wenigstens teilweise Schlämpeabweiser (26a) und Verankerungsfortsätze (28) zur Verankerung in dem ersten Rohrende (1) umfasst.

7. Abdichtung an Betonrohren und Schachtbauwerken nach einem der Ansprüche 1 bis 6,
**dadurch gekennzeichnet, dass** das weichere elastomere Material eine Shore-Härte im Bereich von 20° bis 50° und das härtere elastomere Material eine Shorehärte im Bereich von 50° bis 70° aufweisen

8. Abdichtung an Betonrohren und Schachtbauwerken nach einem der Ansprüche 1 bis 7,
**dadurch gekennzeichnet, dass** sich das weichere elastomere Material und das härtere elastomere Material in ihrer Grundsubstanz unterscheiden.

9. Abdichtung an Betonrohren und Schachtbauwerken nach Anspruch 8,
**dadurch gekennzeichnet, dass** das weichere elastomere Material synthetisches Elastomer oder Gummi enthält.

10. Abdichtung an Betonrohren und Schachtbauwerken nach Anspruch 8,
**dadurch gekennzeichnet, dass** das härtere elastomere Material ein thermoplastisches Elastomer oder einen Kunststoff enthält.

11. Abdichtung an Betonrohren und Schachtbauwerken nach Anspruch 10,
**dadurch gekennzeichnet, dass** der Kunststoff recyceltes Material darstellt.

12. Abdichtung an Betonrohren und Schachtbauwerken nach einem der Ansprüche 1 bis 11,
**dadurch gekennzeichnet, dass** das weichere elastomere Material aus der Gruppe Styrol-Butadien-Kautschuk (SBR), Nitrilkautschuk (NBR) und Ethylen-Propylen-Dien-Mischpolymerisat (EPDM) ausgewählt ist.

13. Abdichtung an Betonrohren und Schachtbauwerken nach einem der Ansprüche 1 bis 12,
**dadurch gekennzeichnet, dass** das härtere elastomere Material aus der Gruppe Styrol-Butadien (SBR), Ethylen-Propylen-Dien-Mischpolymerisat (EPDM) sowie Polyvinylchlorid (PVC) und Polyethylen (PE, TPE) ausgewählt ist.

14. Abdichtung an Betonrohren und Schachtbauwerken nach einem der Ansprüche 1 bis 13,
**dadurch gekennzeichnet, dass** dem weicheren und/oder härteren elastomeren Material ein chemisch oder biologisch wirksames Additiv zugesetzt ist.

## Claims

1. Seal for concrete pipes and shaft constructions, having the following features:
a sealing seat on a first pipe end (1) for receiving an annular seal (10; 20, 30);
an annular seal (10; 20, 30) which is formed of elastomer material of different hardness and comprises an insertion section (11; 21), a sealing section (12; 22) consisting of a softer elastomer material, and a pipe end-deflection section (13; 23) which is located behind the sealing section and consists of elastomer material which is harder at least in regions, wherein the insertion section (11; 21) is formed to facilitate assembly with a second pipe end (2) of the adjacent pipe and the sealing section (12; 22) seals the assembled pipe ends (1, 2);
**characterised in that**
the sealing seat is formed by a recess (3) which comprises a shoulder formation (3a, 3b) for supporting the insertion section, and/or the insertion section (11; 21) contains elastomer material which is at least harder than the sealing section (12; 22) in regions and is supported over its entire surface on a recess (3) provided on the first pipe end so that the sealing section (12; 22) forms, between the insertion section (11; 21) and the pipe end-deflection section (13, 23) having the harder elastomer material, an annular zone enclosed by harder material, wherein the softer elastomer material of the sealing zone cannot deviate from this annular zone.

2. Seal for concrete pipes and shaft constructions as claimed in Claim 1,
**characterised in that** the sealing section (12; 22) contains a reinforcement, or **in that** the insertion section (11; 21) and the pipe end-deflection section (13; 23) consisting of elastomer material which is harder at least in regions are connected to each other by a bridge (15; 25; 35) consisting of firmer material.

3. Seal as claimed in Claim 1 or 2,
**characterised in that** the first pipe end (1) is a pipe collar and the annular seal (10; 20; 30) has been produced so as to be integrated with the pipe collar and is formed as a press lip seal (10) or as a compression seal (20, 30), wherein the pipe end-deflection section (13) having harder elastomer material exposes a manoeuvring space (8) for the second pipe end (2).

4. Seal for concrete pipes and shaft constructions as claimed in Claim 3,
**characterised in that** the pipe end-deflection section (23) is provided with hollow spaces (27) in order to impart a larger radial overall resilience to this section compared with the sealing section (22).

5. Seal for concrete pipes and shaft constructions as claimed in any one of Claims 1 to 4,
**characterised in that** the sealing section (12, 22) includes an annular chamber (9) having a gel (19; 29) which in the event of radial pressure on the sealing section can move in its peripheral direction, and **in that** an activation agent is used as the gel (19; 29), which agent can be increased in volume.

6. Seal for concrete pipes and shaft constructions as claimed in any one of Claims 1 to 5,
**characterised in that** the harder elastomer material at least partially includes a laitance deflector (26a) and anchoring extensions (28) for anchoring in the first pipe end (1).

7. Seal for concrete pipes and shaft constructions as claimed in any one of Claims 1 to 6,
**characterised in that** the softer elastomer material has a Shore hardness in the range of 20° to 50° and the harder elastomer material has a Shore hardness in the range of 50° to 70°.

8. Seal for concrete pipes and shaft constructions as claimed in any one of Claims 1 to 7,
**characterised in that** the softer elastomer material and the harder elastomer material differ in their basic substance.

9. Seal for concrete pipes and shaft constructions as claimed in Claim 8,
**characterised in that** the softer elastomer material contains synthetic elastomer or rubber.

10. Seal for concrete pipes and shaft constructions as claimed in Claim 8,
**characterised in that** the harder elastomer material contains a thermoplastic elastomer or a synthetic material.

11. Seal for concrete pipes and shaft constructions as claimed in Claim 10,
**characterised in that** the synthetic material is recycled material.

12. Seal for concrete pipes and shaft constructions as claimed in any one of Claims 1 to 11,
**characterised in that** the softer elastomer material is selected from the group consisting of styrene butadiene rubber (SBR), nitrile rubber (NBR) and ethylene propylene diene copolymer (EPDM).

13. Seal for concrete pipes and shaft constructions as claimed in any one of Claims 1 to 12,
**characterised in that** the harder elastomer material is selected from the group consisting of styrene butadiene (SBR), ethylene propylene diene copolymer (EPDM) as well as polyvinyl chloride (PVC) and polyethylene (PE, TPE).

14. Seal for concrete pipes and shaft constructions as claimed in any one of Claims 1 to 13,
**characterised in that** a chemically or biologically active additive is added to the softer and/or harder elastomer material.

## Revendications

1. Etanchéité sur des tuyaux en béton et ouvrages de puits, présentant les caractéristiques suivantes :
un siège d'étanchéité sur une première extrémité de tuyau (1) pour la réception d'un joint (10, 20, 30) annulaire ;
un joint (10 ; 20, 30) annulaire, qui est conçu à base de matériaux élastomères de duretés différentes et présente une partie d'introduction (11 ; 21), une partie d'étanchéité (12 ; 22) à base d'un matériau élastomère plus souple et une partie de dégagement d'extrémité de tuyau (13 ; 23) se trouvant derrière la partie d'étanchéité à base d'un matériau élastomère plus dur au moins par endroits, la partie introduction (11 ; 21) étant conçue pour faciliter l'assemblage avec une seconde extrémité de tuyau (2) du tuyau voisin et la partie d'étanchéité (12 ; 22) étanchéifiant les extrémités de tuyau (1, 2) assemblées,
**caractérisée en ce que**
le siège d'étanchéité est formé par un évidement (3) qui présente une formation d'épaulement (3a, 3b) pour le soutien de la partie d'introduction et/ou la partie d'introduction (11 ; 21) contient au moins en face de la partie d'étanchéité (12 ; 22) du matériau élastomère plus dur par endroits, qui s'appuie sur toute la surface sur un évidement (3) prévu sur la première extrémité de tuyau, de sorte que la partie d'étanchéité (12 ; 22) entre la partie d'introduction (11 ; 21) et la partie de dégagement d'extrémité de tuyau (13 ; 23) avec le matériau élastomère plus dur forme une zone annulaire entourée de matériau plus dur, de laquelle le matériau élastomère plus souple de la zone d'étanchéité ne peut pas s'échapper.

2. Etanchéité sur des tuyaux en béton et ouvrages de puits selon la revendication 1,
**caractérisée en ce que** la partie d'étanchéité (12 ; 22) contient une armature ou **en ce que** la partie d'introduction (11 ; 21) et la partie de dégagement pour l'extrémité du tuyau (13 ; 23) à base d'un matériau élastomère plus dur au moins par endroits sont reliées l'une à l'autre par un pont (15 ; 25 ; 35) à base de matériau plus rigide.

3. Etanchéité selon la revendication 1 ou 2,
**caractérisée en ce que** la première extrémité de tuyau (1) présente un manchon et le joint (10 ; 20 ; 30) annulaire a été fabriqué de façon intégrée avec le manchon et est conçu sous forme de joint à lèvres comprimées (10) ou sous forme de joint de compression (20, 30), la partie de dégagement pour l'extrémité de tuyau (13) avec du matériau élastomère plus dur libérant un espace de manoeuvre (8) pour la seconde extrémité du tuyau (2).

4. Etanchéité sur des tuyaux en béton et ouvrages de puits selon la revendication 3,
**caractérisée en ce que** la partie de dégagement pour extrémité de tuyau (23) est dotée de cavités (27) afin de donner à cette partie une souplesse globale radiale plus grande par rapport à la partie d'étanchéité (22).

5. Etanchéité sur des tuyaux en béton et ouvrages de puits selon l'une quelconque des revendications 1 à 4,
**caractérisée en ce que** la partie d'étanchéité (12, 22) comporte une chambre annulaire (9) avec un gel (19 ; 29) qui, en cas de pression radiale exercée sur la partie d'étanchéité, peut glisser dans le sens périphérique de cette partie, et **en ce qu'**un moyen d'activation, qui peut être amené pour l'augmentation de volume, est utilisé comme gel (19 ; 29).

6. Etanchéité sur des tuyaux en béton et ouvrages de puits selon l'une quelconque des revendications 1 à 5, **caractérisée en ce que** le matériau élastomère plus dur comporte au moins en partie des déflecteurs de coulis (26a) et des prolongements d'ancrage (28) pour l'ancrage dans la première extrémité de tuyau (1).

7. Etanchéité sur des tuyaux en béton et ouvrages de puits selon l'une quelconque des revendications 1 à 6,
**caractérisée en ce que** le matériau élastomère plus souple présente une dureté Shore de l'ordre de 20° à 50° et le matériau élastomère plus dur une dureté Shore de l'ordre de 50° à 100°.

8. Etanchéité sur des tuyaux en béton et ouvrages de puits selon l'une quelconque des revendications 1 à 7,
**caractérisée en ce que** le matériau élastomère plus souple et le matériau élastomère plus dur se différencient dans leur structure de base.

9. Etanchéité sur des tuyaux en béton et ouvrages de puits selon la revendication 8,
**caractérisée en ce que** le matériau élastomère plus souple contient de l'élastomère ou du caoutchouc synthétique.

10. Etanchéité sur des tuyaux en béton et ouvrages de puits selon la revendication 8,
**caractérisée en ce que** le matériau élastomère plus dur contient un élastomère thermoplastique ou un plastique.

11. Etanchéité sur des tuyaux en béton et ouvrages de puits selon la revendication 10,
**caractérisée en ce que** le plastique représente du matériau recyclé.

12. Etanchéité sur des tuyaux en béton et ouvrages de puits selon l'une quelconque des revendications 1 à 11,
**caractérisée en ce que** le matériau élastomère plus souple est choisi dans le groupe caoutchouc au styrène-butadiène (SBR), caoutchouc nitrile (NBR) et polymérisat mixte éthylène-propylène-diène (EPDM).

13. Etanchéité sur des tuyaux en béton et ouvrages de puits selon l'une quelconque des revendications 1 à 12,
**caractérisée en ce que** le matériau élastomère plus dur est choisi dans le groupe styrène-butadiène (SBR), polymérisat mixte éthylène-propylène-diène (EPDM) ainsi que chlorure de polyvinyle (PVC) et polyéthylène (PE, TPE).

14. Etanchéité sur des tuyaux en béton et ouvrages de puits selon l'une quelconque des revendications 1 à 13,
**caractérisée en ce qu'**un additif actif sur le plan chimique ou biologique est ajouté au matériau élastomère plus souple et/ou plus dur.
